# EUROPÄISCHE PATENTSCHRIFT

(11) **EP 0 513 503 B1**
(45) Veröffentlichungstag und Bekanntmachung des Hinweises auf die Patenterteilung: **09.11.1994**
(21) Anmeldenummer: 92105123.1
(22) Anmeldetag: 25.03.1992
(51) Int. Cl.: B64C 1/10, B64C 1/22

(54) **Abfangwand in einer Transportkabine eines Flugzeugs**
Load-arresting wall for the cargo space of an aircraft
Cloison pour arrêter une charge dans la soute à fret d'un avion

(30) Priorität: 18.05.1991 DE 4116443
(43) Veröffentlichungstag der Anmeldung: 19.11.1992
(73) Patentinhaber: Daimler-Benz Aerospace Airbus Gesellschaft mit beschränkter Haftung, 21129 Hamburg (DE)
(72) Erfinder: Hararat-Tehrani, Mohamad, W-2800 Bremen 41 (DE)
(74) Vertreter: Hansmann, Dierk, Dipl.-Ing.

(56) Entgegenhaltungen:
- EP-A- 0 223 617
- EP-A- 0 354 403
- DE-A- 3 827 278
- DE-A- 3 827 281

## Beschreibung

Die Erfindung bezieht sich auf eine Abfangwand für Lasten in einer Transportkabine eines Flugzeugs zwischen einem Passagierraum und einem Frachtraum, die mit einer Aufbaustruktur an der Decke und am Boden des Flugzeugs in Halteelementen abgestützt ist.

Aus der DE-PS 38 27 278 ist eine Abfangwand in Flugzeugen für Lasten bekannt, die zwischen zwei Wandplatten angeordnete, mechanische Reibungsdämpfe aufweist. Desweiteren ist eine weitere Abfangwand bekannt geworden, die ebenfallS zwischen zwei Wandplatten angeordnete Reibungsdämpfer zur Energieabsorption aufweist, wobei die eine Wandplatte zusätzlich noch über einen mechanischen Reibungsdämpfer an einer Sitzschiene oder dgl. am Flugzeugboden gehalten wird.

Aufgabe der Erfindung ist es, eine Abfangwand für Lasten nach dem Oberbegriff des Anspruchs 1 zu schaffen, die eine abgefederte Energieabsorption gewährleistet.

Diese Aufgabe wird erfindungsgemäß durch die kennzeichnenden Merkmale des Anspruchs 1 sowie des Anspruchs 11 gelöst. Weitere vorteilhafte Merkmale beinhalten die Unteransprüche.

Die mit der Erfindung erzielten Vorteile bestehen darin, daß durch die als Hohlfedern ausgebildeten Stoßdämpfleisten neben einer Energieabsorption auch ein Federungsanteil gewährleistet ist, wodurch bei Stößen geringer Kraft auf die Abfangwand eine federnde Abstützung erfolgen kann und die Hohlfedern nicht bleibend verformt werden. Die Stoßdämpfleisten sind im Querschnitt ellipsenförmig ausgebildet und es erstrecken sich jeweils mehrere dieser Leisten übereinander zwischen zwei Wandplatten der Abfangwand. Zur Erhöhung der Absorptionsmöglichkeiten sind auch eine Vielzahl von hintereinander liegenden Wandplatten möglich, die dann jeweils dazwischen angeordnete Stoßdämpfleisten aufweisen.

Die Stoßdämpfleiste umfaßt mehrere schichten aus verschiedene Werkstoffen, die die federnde Wirkung als auch die Kraftabsorption in günstiger Weise ermöglichen.

Insbesondere ist hierzu die Zwischenschicht aus einem Federmetall bestehend.

Die optimale Kraftaufnahme ist gegeben, wenn die Stoßrichtung durch die Last in Richtung der kleinen Achse der Ellipse erfolgt. Hierzu ist die Stoßdämpfleiste zwischen den Wandplatten so angeordnet, daß sie sich mit ihren gewölbten Flächen mit großem Radius an der Wandplatte abstützt. Die gewölbten Flächen mit kleinerem Radius liegen frei zwischen den beiden Wandplatten. Zur breitflächigen Abstützung der Stoßdämpfleiste an der Wandplatte, weist sie an eine Außenschicht angeformte nach außen weisende Schenkel auf, die zwischen sich einen Längsschlitz bilden. Insbesondere stützen sich diese Schenkel an einer Wandplatte ab, die der der Last am nächsten liegenden Wandplatte gegenüberstehen.

Bei einer Vielzahl - in bezug auf die Stoßrichtung - hintereinander liegenden Wandplatten der Abfangwand, sind die Leisten, in horizontalen Ebenen nebeneinander jeweils getrennt durch eine Wandplatte und im vertikalen Abstand übereinander angeordnet. Hierdurch wird über die gesamte Fläche der Abfangwand eine gleichmäßige Absorption von Energie ermöglicht. Zusätzlich kann die erste Wandplatte noch mit einer Wabenwand verbunden sein.

Zur gestuften energieabsorbierenden Aufnahme von Stößen können die in einer horizontalen Ebene hintereinanderliegenden Stoßdämpfleisten ein unterschiedliches Deformation- bzw. Federungsverhalten aufweisen. Dies wird erreicht durch ansteigende Dicke der Zwischenschicht in der Hohlfeder von der ersten Wandplatte, die den stoß zuerst aufnimmt, bis zur letzten Wandplatte. Hierdurch wird die Restkraft von - in bezug auf die Stoßrichtung - der hintersten Wandplatte aufgenommen.

Eine weitere Ausführung einer Abfangwand umfaßt wieder die zwischen zwei Wandplatten angeordneten und in horizontalen Ebenen angeordneten aus ellipsenförmigen Hohlfeder bestehenden Stoßdämpfleisten. In gleicher horizontalen Ebene sind mechanische Reibungsdämpfer gemäß der DE-PS 38 27 278 angeordnet, die sich an einer weiteren Wandplatte abstützen. Diese Ausführung ermöglicht eine federnde Aufnahme von Stößen über die Stoßdämpfleiste als auch eine gestufte Energieabsorption.

Nach einer weiteren Ausführungsform kann die Abfangwand auch mittels einem an einer Sitzschiene gehaltenen mechanischen Reibungsdämpfer am Boden des Flugzeugs gehalten sein. Dieser mechanische Reibungsdämpfer ist schwenkbar zur Wand und zur sitzschiene angelenkt, so daß eine gewisse Freiheit der letzten Wandplatte möglich ist.

Ausführungsbeispiele der Erfindung sind in der Zeichnung schematisch dargestellt. Es zeigen:
- Fig. 1: eine schaubildliche Darstellung einer Abfangwand mit als Hohlfedern ausgebildeten Stoßdämpfleisten,
- Fig. 2: eine vergrößerte Darstellung der Stoßdämpfleisten gemäß der Einzelheit Z nach Fig. 1,
- Fig. 3: einen Schnitt durch eine Stoßdämpfleiste gemäß Fig. 1,
- Fig. 4: eine weitere Ausführung einer Abfangwand in Kombination mit einer Stoßdämpfleiste und einem mechanischen Reibungsdämpfer,
- Fig. 5: eine Einzelheit Z der Fig. 4, die eine Abstützung der Wand an eine Sitzschiene über mechanische Dämpferelemente sowie die vergrößerte Darstellung der Stoßdämpfleiste mit Reibungsdämpfer zeigt.

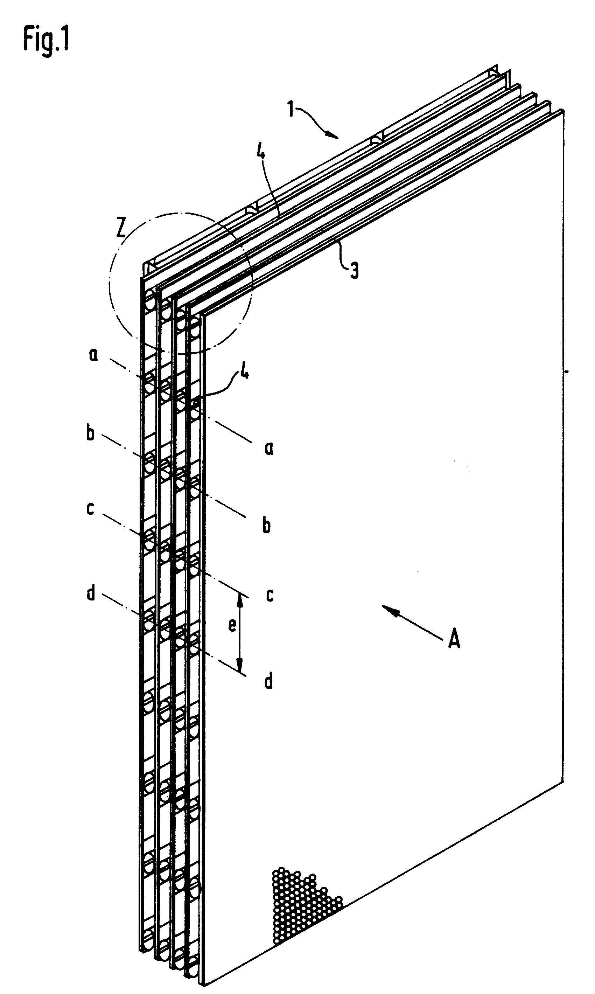

Die Abfangwand 1 umfaßt jeweils zwischen Wandplatten 2 und 3 angeordnete energieabsorbierende, elastische Stoßdämpfleisten 4, die im Querschnitt ellipsenförmige Hohlfedern 5 bilden. Wie Fig. 1 näher zeigt, wird auch durch eine vielzahl von hintereinander liegende Wandplatten eine Abfangwand 1 größerer Dicke erstellt, wobei zwischen jeweils zwei Platten mehrere über die Fläche verteilte Stoßdämpfleisten 4 angeordnet sind.

Die Stoßdämpfleiste 4 weist im Querschnitt die geometrische Form einer Ellipse auf und ist aus mehreren Schichten zusammengesetzt, wobei die äußere Schicht 6 den Grundkörper bildet und aus einem thermoplastischen Kunststoff besteht. Eine innere Schicht 7 kann aus einem Duroplast oder aus einem Metall bestehen, wobei die Zwischenschicht 8 aus einem Federmetall besteht.

An den Grundkörper (äußere Schicht 6) sind zwei Schenkel 9 und 10 angeformt, die sich von der Mittenachse M der Ellipse rechtwinkelig nach außen erstrecken. Sie bilden zwischen sich einen Längsspalt 11, der vorzugsweise symmetrisch zur Mittenachse bzw. Ebene M der Ellipse verläuft.

Die Leiste 4 stützt sich mit den von der gewölbten Fläche 12 abzweigenden Schenkeln 9, 10 an der Wandplatte 2 ab. Die gegenüberliegende gewölbte weitere Fläche 12a stützt sich dagegen an der vornliegenden Wandplatte 3 - in bezug auf die stoßkraft A - ab. Die weiteren beiden gewölbten Flächen 13 und 13a der Stoßdämpfleiste sind freiliegend zwischen den Wandplatten 2 und 3 angeordnet und erstrecken sich in einer vertikalen Ebene Y-Y zwischen diesen.

Wie Fig. 1 näher zeigt sind z.B. fünf Wandplatten hintereinander liegend angeordnet. Zwischen jeweils zwei Wandplatten sind die Leisten 4 vorgesehen. Sie liegen in mehreren horizontalen Ebenen a-a, b-b, c-c, d-d usw. nebeneinander, und sind im Abstand e jeweils zwischen zwei Platten vertikal übereinander angeordnet. Eine versetzte Anordnung der Stoßdämpfleiste wäre auch denkbar, d.h., sie sind zwischen zwei benachbarten Wandplatten in verschiedenen Höhen vorgesehen.

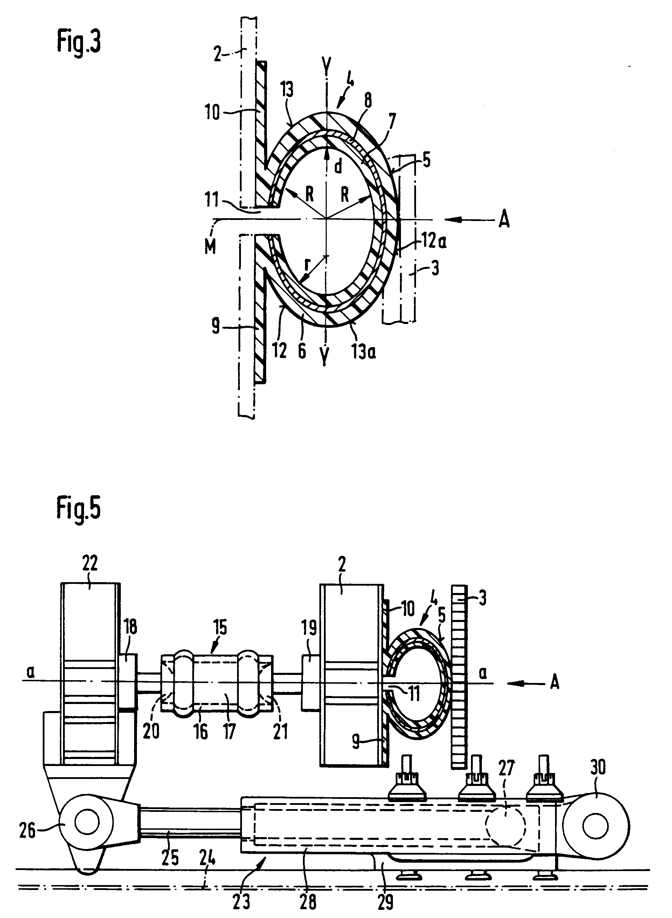

Die Stoßdämpfleisten 4 sind so ausgerichtet, daß die Stoßkraft A in Richtung der Achse bzw. der Ebene M gerichtet ist und die Schenkel 9, 10 sich an der den Stoß zuerst aufnehmenden gegenüberliegenden Wandplatte 2 abstützten, wie Fig. 3 näher zeigt.

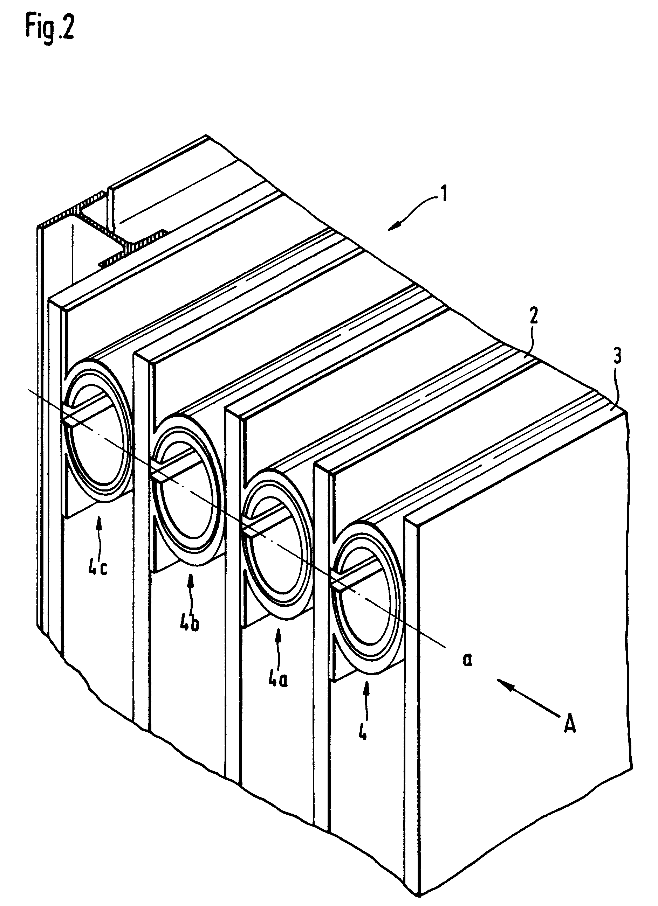

Die Stoßleisten 4 können eine Zwischenschicht 8 gleicher Dicke aufweisen oder eine abgestufte Dicke d besitzen, wie Fig. 3 näher zeigt. Bei einer solchen Ausführung mit unterschiedlichen Dicken d, ist die Zwischenschicht der vorliegenden Leisten 4 (Fig. 2) von geringerer Dicke als die Zwischenschicht der hintersten Leisten 4c. Die dazwischen liegenden Stoßdämpfleisten 4a und 4b weisen Zwischenschichten entsprechend abgestufter Dicken auf.

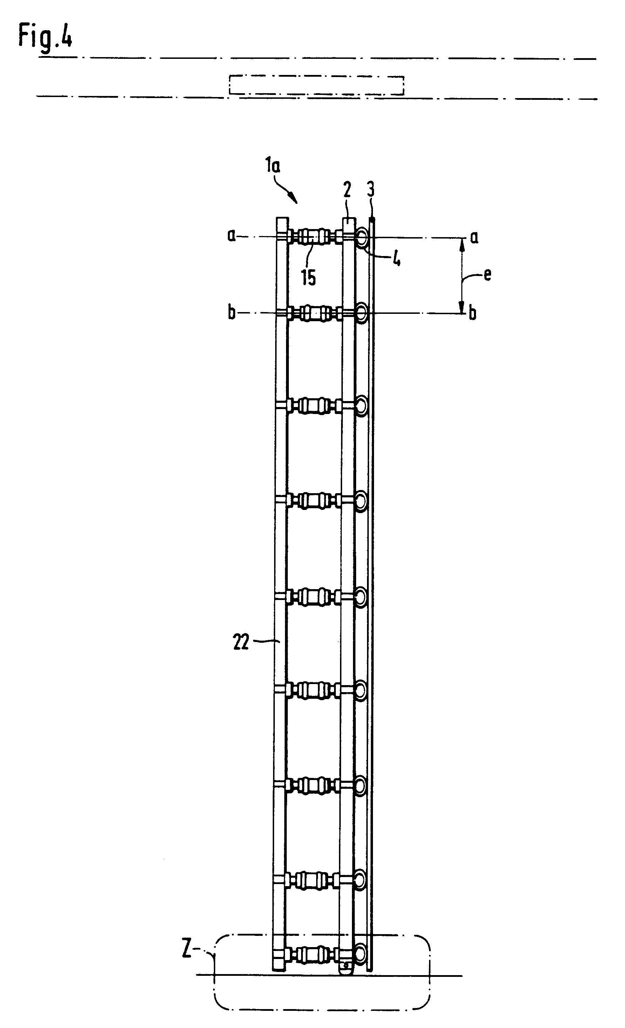

Nach einer weiteren Ausführungsform gemäß der Fig. 4 und 5 ist die Abfangwand 1a mit der Leiste 4 und einem mechanischen Reibungsdämpfer 15 kombiniert. Die energieabsorbierende Elemente sind in einer horizontalen Ebene a-a, b-b usw. achsgleich jeweils zwischen zwei Wandplatten angeordnet. Der mechanische Reibungsdämpfer ist aus der DE-PS 38 27 278 bekannt und umfaßt im wesentlichen einen Zylinder 16, dessen Bohrung 17 sich bei Druck auf die Flansche 18, 19 ein mit diesen verbundener Kugelkopf 20, 21 unter Aufweitung der Bohrung 17 hineinzwängt. Hierzu ist der Innendurchmesser kleiner als der Außendurchmesser der Kugelköpfe 20 und 21, so daß bei einer Beanspruchung in Stoßrichtung A durch Aufbringung von Reibungsenergie Bewegungsenergie ausgelöst durch Lasten absorbiert werden kann.

Die dritte Wandplatte 22 der Abfangwand 1a ist mit einem energiesaufnehmenden mechanischen Dämpferelement 23 verbunden, das an einer Sitzschiene 24 am Flugzeugboden gehalten ist. Dieses Dämpfungselement 23 ist aus der DE-C-3272281 bekannt und ist ähnlich aufgebaut wie der mechanische Reibungsdämpfer 15 nur daß das Dämpfungselement 23 auf Zug beansprucht wird. Das Dämpfungselement 23 umfaßt im wesentlichen eine Stange 25, die an der Wandplatte 22 um eine Achse 26 schwenkbar angelenkt ist und an ihrem dieser Lagerung abgekehrten Ende eine Reibungskugel 27 aufweist, die im Zylinder 28 innerhalb einer Bohrung geringeren Durchmessers als die Kugel 27 verfahrbar ist. Der Zylinder 28 ist wiederum an einem Halteklotz 29 der Sitzschiene 24 verschwenkt um eine Achse 30 gehalten.

## Patentansprüche

1. Abfangwand für Lasten in einer Transportkabine eines Flugzeugs zwischen einem Passagierraum und einem Frachtraum, die mit einer Aufbaustruktur an der Decke und am Boden des Flugzeugs in Halteelementen abgestützt ist, dadurch gekennzeichnet, daß die Abfangwand (1; 1a) im Abstand zueinander angeordnete energieabsorbierende elastische Stoßdämpfleisten (4) umfaßt, die sich jeweils zwischen zwei Wandplatten (2, 3) der Abfangwand erstrecken und im Querschnitt ellipsenförmige Hohlfedern (5) bilden.

2. Abfangwand nach Anspruch 1, dadurch gekennzeichnet, daß diese Wand (1; 1a) aus mehreren hintereinander angeordneten Wandplatten besteht, zwischen denen jeweils Stoßdämpfleisten (4) gehalten sind.

3. Abfangwand nach Anspruch 1 oder 2, dadurch gekennzeichnet, daß die Stoßdämpfleiste (4) eine Wandung mit mehreren elastischen Schichten (6, 7 und 8) umfaßt.

4. Abfangwand nach Anspruch 3, dadurch gekennzeichnet, daß die äußere Schicht (6) der Hohlfeder (5) aus einem thermoplastischen Kunststoff, eine innere Schicht (7) aus einem Duroplast und eine Zwischenschicht (8) aus einem Federmetall besteht.

5. Abfangwand nach Anspruch 3, dadurch gekennzeichnet, daß die äußere Schicht (6) der Hohlfeder (5) aus einem thermoplastischen Kunststoff, eine innere Schicht (7) aus einem Metall und eine Zwischenschicht (8) aus einem Federmetall besteht.

6. Abfangwand nach einem der Ansprüche 1 bis 5, dadurch gekennzeichnet, daß die Leiste (4) aus einer ersten gewölbten Fläche (12) mit einem großen Radius (R) parallel zur Ellipsenachse (Y-Y) verlaufende Schenkel (9, 10) aufweist, die mit der äußeren Schicht einteilig ausgeführt sind und zwischen sich einen Längsschlitz (11) bilden.

7. Abfangwand nach einem der Ansprüche 1 bis 6, dadurch gekennzeichnet, daß die Stoßdämpfleiste (4) über die beiden Schenkel (9, 10) an einer Wandplatte (2) und die gegenüberliegende zweite gewölbte Fläche (12a) mit großen Radius (R) an der weiteren Wandplatte (3) abgestützt ist, wobei die weiteren gewölbten Flächen (13, 13a) der Stoßdämpfleiste (4) mit kleinem Radius (r) in einer zwischen den Wandplatten (2 und 3) verlaufenden senkrechten Ebene (Y-Y) liegen.

8. Abfangwand nach einem der Ansprüche 1 bis 7, dadurch gekennzeichnet, daß die Stoßdämpfleisten (4) jeweils zwischen zwei Wandplatten (2, 3) mit Abstand (e) zueinander in horizontalen Ebenen (a-a, b-b, c-c, d-d usw.) und - in bezug auf die Stoßkraft (A) - in diesen Ebenen hintereinanderliegend, von jeweils einer Wandplatte getrennt, angeordnet sind.

9. Abfangwand nach einem der Ansprüche 1 bis 8, dadurch gekennzeichnet, daß gegenüberliegend der den Anfangsstoß aufnehmenden ersten Wandplatte (3) die Schenkel (9, 10) an der zweiten Wandplatte (3) abgestützt sind und jede weitere Stoßdämpfleiste (4) entsprechend angeordnet ist.

10. Abfangwand nach einem der Ansprüche 1 bis 9, dadurch gekennzeichnet, daß die elastischen Zwischenschichten (8) der in einer horizontalen Ebene (a-a, b-b usw.) hintereinanderliegenden Stoßdämpfleisten (4, 4a, 4b, 4c) zwischen den Wandplatten (2, 3) jeweils eine von der ersten Wandplatte (3) bis zu letzten Wandplatte ansteigende Dicke (d) aufweisen.

11. Abfangwand für Lasten in einer Transportkabine eines Flugzeugs zwischen einem Passagierraum und einem Frachtraum, die mit einer Aufbaustruktur an der Decke und am Boden des Flugzeugs in Halteelementen abgestützt ist, dadurch gekennzeichnet, daß die Abfangwand (1a) im vertikalen Abstand (e) zueinander angeordnete energieabsorbierende elastische Stoßdämpfleisten (4) umfaßt, die sich jeweils zwischen zwei Wandplatten (2, 3) der Abfangwand erstrecken und aus einem im Querschnitt ellipsenförmigen Profil bestehen und eine Hohlfeder (5) bilden und daß in der gleichen Ebene ein sich an einer weiteren Wandplatte (22) der Abfangwand abstützender mechanischer Reibungsdämpfer (15) angeordnet ist und dieser mit der Stoßdämpfleiste (4) eine energieabsorbierende Wirkeinheit bildet.

12. Abfangwand nach Anspruch 11, dadurch gekennzeichnet, daß die weitere Wandplatte (22) über ein an einer Sitzschiene (24) befestigtes energieaufnehmendes Dämpferelement (23) gehalten und schwenkbar angelenkt ist, das ein Reibelement (27) innerhalb eines Zylinders (28) umfaßt, welches an einer mit der Wand (22) verbundenen Stange (25) befestigt ist.

## Claims

1. Cushioning wall for loads in a transport cabin of an aircraft between a passenger compartment and a cargo compartment, which is supported with a mounting structure in holding elements at the ceiling and at the floor of the aircraft, characterised in that the cushioning wall (1; 1a) comprises energy-absorbing, elastic shock-absorbing strips (4) which are arranged at a distance from one another, each of which extends between two wall panels (2, 3) of the cushioning wall and which form elliptical hollow springs (5) in cross section.

2. Cushioning wall according to claim 1, characterised in that this wall (1; 1a) consists of a plurality of wall panels which are arranged one behind the other and between which shock-absorbing strips (4) are held.

3. Cushioning wall according to claim 1 or 2, characterised in that the shock-absorbing strip (4) comprises a wall with a plurality of elastic layers (6, 7 and 8).

4. Cushioning wall according to claim 3, characterised in that the outer layer (6) of the hollow spring (5) consists of a thermoplastic plastic, an inner layer (7) of a thermoset plastic and an intermediate layer (8) of a spring metal.

5. Cushioning wall according to claim 3, characterised in that the outer layer (6) of the hollow spring (5) consists of a thermoplastic plastic, an inner layer (7) of a metal and an intermediate layer (8) of a spring metal.

6. Cushioning wall according to any one of claims 1 to 5, characterised in that the strip (4) consisting of a first vaulted surface (12) with a major radius (R) comprises legs (9, 10) which extend parallel to the ellipse axis (Y-Y), are integral with the outer layer and between which an elongate slot (11) is formed.

7. Cushioning wall according to any one of claims 1 to 6, characterised in that the shock-absorbing strip (4) is supported via the two legs (9, 10) at one wall panel (2) and via the opposite second vaulted surface (12a) with a major radius (R) at the other wall panel (3), the other vaulted surfaces (13, 13a) of the shock-absorbing strip (4) with a minor radius (r) lying in a vertical plane (Y-Y) extending between the wall panels (2 and 3).

8. Cushioning wall according to any one of claims 1 to 7, characterised in that the shock-absorbing strips (4) are each arranged between two wall panels (2, 3) at a distance (e) from one another in horizontal planes (a-a, b-b, c-c, d-d, etc.) and - in relation to the impact force (A) - one behind the other in these planes, being separated from one another by a respective wall panel.

9. Cushioning wall according to any one of claims 1 to 8, characterised in that the legs (9, 10) are supported at the second wall panel (2) opposite the first wall panel (3) absorbing the initial impact, and each further shock-absorbing strip (4) is arranged accordingly.

10. Cushioning wall according to any one of claims 1 to 9, characterised in that the elastic intermediate layers (8) of the shock-absorbing strips (4, 4a, 4b, 4c), which are disposed one behind the other in a horizontal plane (a-a, b-b, etc.), between the wall panels (2, 3) are of a thickness (d) which increases from the first wall panel (3) to the last wall panel.

11. Cushioning wall for loads in a transport cabin of an aircraft between a passenger compartment and a cargo compartment, which is supported with a mounting structure in holding elements at the ceiling and at the floor of the aircraft, characterised in that the cushioning wall (1a) comprises energy-absorbing, elastic shock-absorbing strips (4) which are arranged at a vertical distance (e) from one another, each of which extends between two wall panels (2, 3) of the cushioning wall, which consist of a profile of an elliptical cross section and which form a hollow spring (5), and that a mechanical friction damper (15), which is supported at a further wall panel (22) of the cushioning wall, is arranged in the same plane and forms with the shock-absorbing strip (4) an energy-absorbing active unit.

12. Cushioning wall according to claim 11, characterised in that the further wall panel (22) is held and pivotably hinged via an energy-absorbing damper element (23), which is secured to a seating rail (24) and comprises a friction element (27) inside a cylinder (28), which is secured to a rod (25) connected to the wall (22).

## Revendications

1. Paroi absorbante d'interception pour des charges dans une cabine de transport d'un avion, entre un compartiment pour les passagers et une soute pour le fret, qui s'appuie par une structure de montage sur le toit et la soute de l'avion dans des éléments de maintien, paroi absorbante caractérisée en ce que cette paroi absorbante (1 ; 1a) entoure des barres servant à amortir les chocs (4), qui sont élastiques, absorbent l'énergie et sont disposées à une certaine distance les unes des autres, et qui s'étendent respectivement entre deux plaques (2, 3) de la paroi absorbante et forment des ressorts creux (5) ayant en section transversale la forme d'une ellipse.

2. Paroi selon la revendication 1, caractérisée en ce que cette paroi (1 ; 1a) se compose de plusieurs plaques de parois disposées les unes derrière les autres, entre lesquelles sont maintenues respectivement des barres (4) servant à amortir les chocs.

3. Paroi selon la revendication 1 ou 2, caractérisée en ce que la barre d'amortissement de chocs (4) entoure une paroi avec plusieurs couches élastiques (6, 7 et 8).

4. Paroi selon la revendication 3, caractérisée en ce que la couche extérieure (6) du ressort creux (5) consiste en une matière thermoplastique, une couche intérieure (7) en une résine thermodurcissable et une couche intermédiaire (8) en un métal à ressort.

5. Paroi selon la revendication 3, caractérisée en ce que la couche extérieure (6) du ressort creux (5) consiste en une matière thermoplastique, une couche intérieure (7) en métal et une couche intermédiaire (8) en un métal à ressort.

6. Paroi selon l'une des revendications 1 à 5, caractérisée en ce que la barre (4) présente des branches (9, 10) s'étendant parallèlement à l'axe Y-Y de l'ellipse à partir d'une première surface galbée (12) avec un grand rayon (R), branches qui sont exécutées d'une seule pièce avec la couche extérieure et forment entre elles une fente longitudinale (11).

7. Paroi selon l'une des revendications 1 à 6, caractérisée en ce que la barre d'amortissement des chocs (4) est abutée par l'intermédiaire des deux branches (9, 10) sur une plaque de paroi (2) et la deuxième surface galbée opposée (12a) avec un grand rayon (R) est abutée sur l'autre plaque de paroi (3), les autres surfaces galbées (13, 13a) de la barre d'amortissement des chocs (4) avec un petit rayon (r) se trouvant dans un plan (Y-Y) perpendiculaire s'étendant entre les plaques de paroi (2 et 3).

8. Paroi selon l'une des revendications 1 à 7, caractérisée en ce que les barres d'amortissement de chocs (4) sont disposées respectivement entre deux plaques de paroi (2, 3) à une distance (e) l'une de l'autre dans des plans horizontaux (a-a, b-b, c-c, d-d etc.) et - en ce qui concerne la force de choc - en se trouvant les unes derrière les autres dans ces plans, séparées respectivement par une plaque de paroi.

9. Paroi selon l'une des revendications 1 à 8, caractérisée en ce que les branches (9, 10) sont abutées sur la deuxième plaque de paroi (3) en se trouvant en regard de la première plaque de paroi (3) recevant le choc initial et chaque autre barre d'amortissement de choc (4) est disposée de façon correspondante.

10. Paroi selon l'une des revendications 1 à 9, caractérisée en ce que les couches intermédiaires élastiques (8) des barres d'amortissement de chocs (4, 4a, 4b, 4c) se trouvant les unes derrière les autres dans un plan horizontal (a-a, b-b, etc.) présentent entre les plaques de paroi (2, 3) respectivement une épaisseur (d) qui va en croissant de la première plaque de paroi (3) jusqu'à la dernière plaque de paroi.

11. Paroi pour charges dans une cabine de transport d'un avion située entre un compartiment pour les passagers et une soute pour le fret, paroi qui s'appuie par une structure de montage sur le toit et la soute de l'avion dans des éléments de maintien, caractérisée en ce que cette paroi absorbante (1a) comprend des barres d'amortissement des chocs (4) élastiques, absorbant l'énergie, disposées à une distance verticale (e) les unes des autres, barres qui s'étendent respectivement entre deux plaques (2, 3) de paroi absorbante et consistent en un profilé de forme elliptique en section transversale et forment un ressort creux (5) et en ce que dans le même plan est disposé un amortisseur (15) mécanique à friction s'appuyant sur une autre plaque (22) de la paroi absorbante et celle-ci forme avec la barre d'amortissement de chocs (4) une unité opérationnelle absorbant l'énergie.

12. Paroi selon la revendication 11, caractérisée en ce que l'autre plaque de paroi (22) est maintenue par l'intermédiaire d'un élément amortisseur (23) absorbant de l'énergie, fixé sur un rail de siège (24) et est articulée de façon à pouvoir pivoter, l'élément comprenant un élément de friction à l'intérieur d'un cylindre (28), qui est fixé sur une tige (25) reliée à la paroi (22).
